# EUROPÄISCHE PATENTSCHRIFT

(11) **EP 0 902 518 B1**
(45) Veröffentlichungstag und Bekanntmachung des Hinweises auf die Patenterteilung: **20.07.2005**
(21) Anmeldenummer: 98107378.6
(22) Anmeldetag: 23.04.1998
(51) Int. Cl.: H02J 4/00

(54) **Energieverteilungssystem in Schiffen**
Power distribution system in ships
Système de distribution d'énergie dans des navires

(30) Priorität: 15.09.1997 DE 19740466
(43) Veröffentlichungstag der Anmeldung: 17.03.1999
(73) Patentinhaber: SAM Electronics GmbH, 22763 Hamburg (DE)
(72) Erfinder: Rieckmann, Michael, 21224 Rosengarten (DE)
(74) Vertreter: Mahler, Peter, Dipl.-Phys.

(56) Entgegenhaltungen:
- EP-A- 0 536 876
- DE-A- 3 836 418
- DE-A- 4 032 735
- US-A- 4 732 103

## Beschreibung

Die Erfindung betrifft ein Energieverteilungssystem in Schiffen zur Energieversorgung von auf Schiffszonen verteilten Energieverbrauchern aus bordeigenen Energiequellen der im Oberbegriff des Anspruchs 1 definierten Gattung.

Bekannte, schiffsbauübliche Energieverteilungssysteme (Germanischer Lloyd "Vorschriften für Klassifikation und Bau von stählernen Seeschiffen" Ausgabe 1989, Kapitel 4, elektrische Anlagen, Seite 3-9 bis 3-20) weisen zwei zentrale Schalttafeln in jeweils einer Schiffszone oder Schiffsabteilung auf, und zwar eine Hauptschalttafel und eine Notschalttafel. Jede Schalttafel enthält sowohl Speiseschalter für die Energiequellen, wie Generatoren, Transformatoren oder Umformer, als auch Verteilerschalter, die die Verbraucher oder Verbrauchergruppen in den Schiffszonen mit Energie versorgen. Die Verteilung der Energie erfolgt von der jeweiligen Schalttafel aus über Leistungskabel, die strahlenförmig in die jeweilige Schiffszone führen, um dort Unterverteilungs-Schalttafeln oder Verbraucher oder Verbrauchergruppen zu speisen. Im Zentrum der über Leistungskabel erfolgenden strahlenförmigen Energieverteilung liegt die jeweilige zentrale Schalttafel.

Für Schiffe mit erhöhten Ansprüchen an die Sicherheit der Energieversorgung, z.B. Passagierschiffe oder Marineschiffe, werden zwei Hauptschalttafeln mit Verteilerschaltern für eine redundante Energieversorgung von wichtigen Verbrauchergruppen eingesetzt. Diese wichtigen Verbrauchergruppen werden über zwei strahlenförmig ausgebildete Energieverteilungen versorgt, deren zugehörige zentrale Schalttafeln in unterschiedlichen Schiffszonen angeordnet und von den Energiequellen gespeist sind.

DE 40 32 735A offenbart ein Energieverteilungssystem in Schiffen mit den im Oberbegriff des Anspruchs 1 definierten Merkmalen.

Der Erfindung liegt die Aufgabe zugrunde, ein verbessertes Energieverteilungssystem in Schiffen der eingangs genannten Art zu schaffen, das flexibel in Planung und Projektierung, problemlos erweiterungsfähig und geeignet für nachträgliche Änderung von Leistungsabgängen in den einzelnen Schiffszonen sowie kostengünstig zu installieren ist.

Die Aufgabe ist bei einem Energieverteilungssystem in Schiffen der im Oberbegriff des Anspruchs 1 angegebenen Gattung erfindungsgemäß durch die Merkmale im Kennzeichenteil des Anspruchs 1 gelöst.

Das erfindungsgemäße Energieverteilungssystem in Schiffen hat den Vorteil, daß durch den schiffszonenübergreifend und durchgehend durch die Schiffzonen oder -abteilungen installierten Energiebus die Verteilung der Quellenenergie direkt und ohne Zwischenschaltung von Verteilerschaltern erfolgt. Die Energiezufuhr zum Energiebus erfolgt über Speiseschalter direkt von den Energiequellen, und zwar in denjenigen Schiffszonen oder -abteilungen, in denen diese Energiequellen angeordnet sind, die Energieabfuhr vom Energiebus erfolgt über Abgangsschalter in den einzelnen Schiffszonen oder -abteilungen, in denen die Energie benötigt wird. Innerhalb jeder Schiffzone oder -abteilung erfolgt der Ernergietransport über Leistungskabel zu den Verbrauchern oder Verbrauchergruppen und/oder über Leistungskabel zu Unterverteilungstafeln, die über Verteilerschalter und Leistungskabel die Verbraucher versorgen, und/oder über Unterenergiebusse, die anstelle der oder zusätzlich zu den Unterverteilung-Schalttafeln eingesetzt werden und ebenfalls über Abgangsschalter Verbraucher oder Verbrauchergruppen direkt über Leistungskabel mit Energie versorgen. Damit erfolgt insgesamt eine dezentralisierte, sichere, abteilungsautarke Versorgung direkt mit Quellenenergie, die in den einzelnen Schiffszonen ständig verfügbar ist. Durch die erfindungsgemäße Konzeption eignet sich das neuartige Energieverteilungssystem für die Vorausrüstung von Schiffssektoren und ist flexibel in Planung und Projektierung, da es Stück für Stück mit dem Baufortschritt wächst und innerhalb der Schiffssektoren nur standardisierte Einzelkomponenten verwendet, so daß z.B. die schiffsbauübliche frühzeitige Fertigung und Integration von Hauptschalttafeln entfällt. Durch Einsparung von Fern-Leistungskabeln und durch eine zoneninterne Verlegung von Leistungskabeln mit entsprechend kurzen Kabellängen vereinfacht sich die Installation des Energieverteilungssystems erheblich. Durch Verwendung von Einzelschaltern anstelle von Schalttafeln wird die Wartung erleichtert und ein hoher Standardisierungsgrad mit kostensenkender Wirkung erreicht. Außerdem sind Einzelschalter bauraumsparender unterzubringen als voluminöse Schalttafeln. Die Abgangsschalter erfordern eine geringere Kurzschlußfestigkeit, da diese in der Mehrzahl fern von den Energiequellen angeordnet sind, und werden damit kostengünstiger. Eine gegenseitige Störbeeinflussung der Abgangsschalter ist vermieden, so daß ihre Standfestigkeit erhöht wird. Der Energiebus kann zusätzlich zur Datenübertragung genutzt werden, so daß durch Einsparung separater Fern-Datenkabel ein weiterer kostensenkender Effekt erzielt wird.

Zweckmäßige Ausführungsformen des erfindungsgemäßen Energieverteilungssystem mit vorteilhaften Weiterbildungen und Ausgestaltungen der Erfindung ergeben sich aus den weiteren Ansprüchen.

Gemäß einer bevorzugten Ausführungsform der Erfindung wird ein zweiter Energiebus vorgesehen, der in gleicher Weise alle Schiffszonen durchzieht und in den einzelnen Schiffszonen mit Abgangsschaltern versehen ist. Die Energiequellen sind auf beide Energiebusse aufgeteilt. Durch diese Maßnahmen ergibt sich eine redundante Energieversorgung in den Schiffszonen, was die Ausfallsicherheit des Energieverteilungssystems beträchtlich erhöht.

Gemäß einer vorteilhaften Ausführungsform der Erfindung sind die beiden redundanten Einzelbusse durch einen Kupplungsschalter miteinander verbindbar, so daß bei Ausfall der Energieversorgung eines Energiebusses die Energieversorgung über den anderen Energiebus mit sichergestellt werden kann.

Gemäß einer vorteilhaften Ausführungsform der Erfindung ist der Energiebus bzw. sind die Energiebusse als metall-, vorzugsweise blechgekapselte Stromschienen ausgeführt und an den Stromschienen Anschlußelemente für die Abgangsschalter vorgesehen Durch diese Metallkapselung erhält jeder Energiebus einen hoheren mechanischen Schutz im Vergleich zu Fern-Leistungskabeln und eine hochwirksame EMV-Schirmung, wodurch die Ausfallsicherheit des Energiebusses beträchtlich erhöht wird.

Gemäß einer vorteilhaften Ausführungsform der Erfindung ist mindestens eine der Notversorgung des Energieverteilungssystems dienende Energiequelle, ein sog. Notstromaggregat, mittels eines Notspeiseschalters auf den Energiebus aufschaltbar, wobei spätestens mit Aufschalten der Notversorgungs-Energiequelle alle nicht der Notversorgung dienenden Verbraucher vom Energiebus getrennt sind. Die Trennung erfolgt dabei über den Black-Out des Energieverteilungsnetzes mittels in den Abgangsschaltern zu den Haupt- und Nebenverbrauchern integrierter Unterspannungsauslösung. Durch diese Notenergieverteilung über den Energiebus ergibt sich eine Kosteneinsparung gegenüber der herkömmlichen Installation von zwei getrennten Energieverteilungssystemen für den Not- und den Hauptbetrieb und zusätzlich eine höhere und sichere Verfügbarkeit von Haupt- und Notenergie in allen Abteilungen oder Zonen des Schiffes. Durch die automatische Abschaltung aller nicht der Notversorgung dienenden Verbraucher vom Energiebus wird eine Überlastung des leistungsschwächeren Notstromgenerators vermieden. Zusätzlich können durch eine leicht zu bewerkstelligende Nachrüstung von Abgangsschaltern unter Spannung direkt im Verlauf des Energiebusses Schalteinrichtungen für transportable Notverbraucher in jeder betroffenen Schiffsabteilung installiert werden.

Gemäß einer bevorzugten Ausführungsform der Erfindung sind an dem Energiebus Spannungswandler (Transformatoren, Umformer und dgl.) zum Betreiben von Sekundärspannungsnetzen in den einzelnen Schiffszonen angeschlossen. Damit erfolgt die Verteilung der Sekundärenergie nicht wie bei bekannten Energieverteilungssystemen schiffszonenübergreifend von einer zentralen Stelle aus, sondern nur zonenintern über einen Sekundärenergiebus oder über Leistungskabel. Damit ergibt sich wiederum eine Kosteneinsparung gegenüber der Installation eines zusätzlichen, schiffszonenübergreifenden Energieverteilungssystemen für das Sekundarspannungssystem des Schiffes und durch kleinere Leistung der in den einzelnen Schiffszonen erforderlichen Spannungswandler. Durch die Mehrzahl der kleineren Spannungswandler erhält man eine höhere Ausfallsicherheit für die Teilsysteme und damit eine höhere und sichere Verfügbarkeit der Energie des Sekundärspannungssystems.

Gemäß einer bevorzugten Ausführungsform der Erfindung wird der schiffszonenübergreifende Energiebus oberhalb der Schotts verlegt, welche die Schiffszonen voneinander wasserdicht trennen. Dies hat den Vorteil, daß z.B. bei überfluteten Abteilungen des Schiffes die Energieverteilung des Schiffes im sicheren Schiffsbereich verläuft und der Notbetrieb aufrecht erhalten werden kann. Die durch das eindringende Wasser gefährdeten Teile des Energiebusses werden durch Trennlaschen oder -schalter abgetrennt.

Gemäß einer vorteilhaften Ausführungsform der Erfindung sind die beiden, vorzugsweise an den Längsseiten des Schiffes verlegten Energiebusses mittels Kuppelschalter zu einem Ringbus vereinigt und der Ringbus durch weitere Kuppelschalter in Busabschnitte unterteilt, an denen jeweils mindestens eine Energiequelle angeschlossen ist. Der Ringbus wird dabei vorteilhaft in begehbaren, gepanzerten Kästen verlegt, wie sie bei Schiffen mit militärischen Einsatzprofil an den beiden Schiffslangsseiten oberhalb der Schotts zu finden sind.

Durch diese Ringbuskonfiguration und der weitgehenden Verlegung in die sicheren Kastenträger wird die Energieversorgung im Primärspannungsbereich mit hoher Sicherheit, Verfügbarkeit und Standfestigkeit gewährleistet. Die erforderliche Energieversorgung mit Sekundärspannung erfolgt über die dezentral in den jeweiligen Schiffszonen angeordneten Spannungswandler, die je nach Anwendungsfall einfach oder redundant ausgeführt werden.

Gemäß einer vorteilhaften Ausführungsform der Erfindung ist eine zweistufige Steuerung und Überwachung des Energiebusses vorgesehen, die eine zentrale Fernsteuerung und -überwachung und dezentrale Vorortsteuerungen und - überwachungen in den einzelnen Schiffszonen umfaßt. Die zentrale Fernsteuerung und -überwachung wird an zentraler Stelle, z.B. in einer Energieerzeugungsstation oder in einer Maschinenkontrollstation, installiert, und zur Übertragung der Steuerungs- und überwachungssignale wird ein schneller Datenbus, z.B. ASI, eingesetzt. Die Vorortsteuerung und -überwachung erfolgt manuell direkt am Einbauort der Schalteinrichtungen durch manuelle Betätigungsmöglichkeiten an den Schalteinrichtungen und durch visuelle Überwachung der Schalteinrichtung mit entsprechenden Mitteln, wie Schalterstellungsanzeigen, Leuchtmelder, Meßinstrumente und dgl., am Einbauort der Schalteinrichtung. Die dezentrale Vorortsteuerung- und überwachung stellt die Rückfallfunktion für die zentrale Fernsteuerung und -überwachung dar.

Die Erfindung ist anhand von in der Zeichnung dargestellten Ausführungsbeispielen im folgenden näher beschrieben Es ist zeigen:
- Fig.1: ein Blockschaltbild eines Energieverteilungssystems in einem Schiff,
- Fig.2: ein Blockschaltbild eines gleichen Energieverteilungssystems wie in Fig.1 mit redundant ausgeführter Stromversorgung,
- Fig.3: die Einbindung eines Energieverteilungssystems in ein Schiff, schematisch dargestellt,
- Fig.4: die Anordnung eines modifizierten Energieverteilungssystem in einem Schiff für militärische Zwecke, ausschnittsweise und schematisch dargestellt.

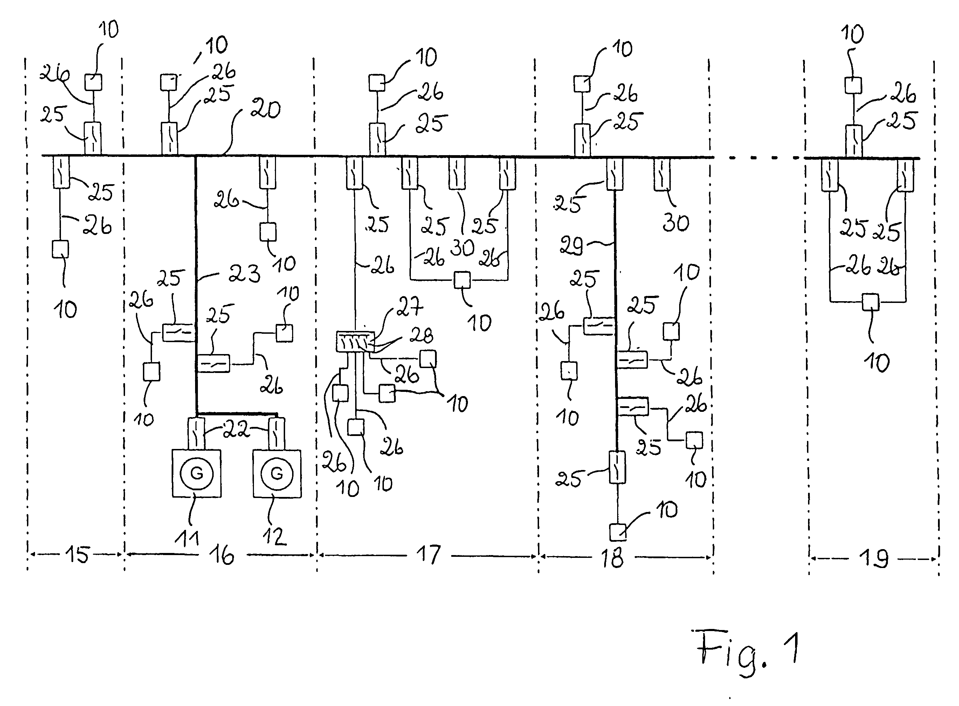

Das in Fig.1 im Blockschaltbild dargestellte Energieverteilungssystem in einem Schiff dient zur Energieversorgung von Energieverbrauchern 10 aus bordeigenen Energiequellen 11, 12, die hier von Generatoren G repräsentiert werden, aber auch Transformatoren oder Umformer sein können. Die Summe der Energieverbraucher 10 ist in unterschiedlicher Weise auf mehrere Schiffzonen 15 bis 19 verteilt, die auch Schiffsabteilungen oder Schiffssektoren genannt werden. Im Ausführungsbeispiel sind vier unterschiedlich mit Energieverbrauchern 10 ausgestattete Schiffszonen 15 bis 19 dargestellt. Ihre Anzahl ist jedoch beliebig und richtet sich nach der Größe des Schiffes und den Bedürfnissen der Aufteilung in Energieversorgungszonen.

Tragender Bestandteil des Energieverteilungssystems ist ein von den Energiequellen 11, 12 gespeister Energiebus 20, der schiffszonenübergreifend installiert ist, also alle Schiffszonen 15 bis 19 durchzieht. Die beiden Energiequellen 11, 12 sind über je einen Speiseschalter 22 an den Energiebus 20 angekopppelt, und zwar unmittelbar in der Schiffszone 16, in der sie angeordnet sind. Aus räumlichen Gründen erfolgt im Ausführungsbeispiel der Fig.1 die Ankopplung der Energiequellen 11, 12 an den Energiebus 20 nicht unmittelbar, sondern über einen Busabzweig 23, der untrennbar mit dem Energiebus 20 verbunden ist. Die Energieabnahme vom Energiebus 20 erfolgt in den einzelnen Schiffszonen 15 bis 19 für die dort vorhandenen Energieverbraucher 10 mittels Abgangsschalter 25, die an den die jeweiligen Schiffszonen 15 bis 19 durchziehenden Abschnitten des Energiebusses 20 angeschlossen sind. Ausgangsseitig sind die Abgangsschalter 25 über Lastkabel 26 entweder direkt mit einem Verbraucher 10 (Schiffszonen 15, 16) oder über ein Lastkabel 26 mit einer Unterverteiler-Schalttafel 27 verbunden (Schiffszone 17). Die Unterverteiler-Schalttafel 27 weist ihrerseits eine Reihe von Verteilerschaltern 28 auf, die ausgangsseitig über Lastkabel 26 mit jeweils einem Verbraucher 10 verbunden sind (Schiffszone 17). Anstelle einer Unterverteiler-Schalttafel 27 kann auch ein Unterenergiebus 29 in der Schiffszone verlegt sein, wie dies in Fig.1 für die Schiffszone 18 dargestellt ist. An diesem Unterenergiebus 29 sind dann die Verbraucher 10 in der Schiffszone 18 über Lastkabel 26 und Abgangsschalter 25 angeschlossen. Für die Notstromversorgung sind in einigen Schiffszonen 17 und 18 zusätzliche Abgangsschalter 30 an dem Energiebus 20 angeschlossen, über die dann die Energieversorgung im Notfall erfolgt. Wird für den einen oder anderen Verbraucher 10 in den einzelnen Schiffzonen 15 bis 19 eine erhöhte Sicherheit in der Energieversorgung gefordert, so wird der Verbraucher 10 über zwei Lastkabel 26 und zwei Abgangsschalter 25 an den Energiebus 20 gelegt, wie dies für den einen Verbraucher 10 in Schiffszone 17 und in Schiffszone 19 gezeigt ist.

Wie nicht weiter dargestellt ist, wird der Energiebus 20 - und ebenso der Busabzweig 23 - mittels einer metallgekapselten, z.B. blechgekapselten Stromschiene realisiert, wie sie im Handel erhältlich ist. Diese metallgekapselte Stromschiene trägt eine Vielzahl von Anschlußelemente zum Anschließen der Abgangsschalter 25 in den einzelnen Schiffszonen 15 bis 19.

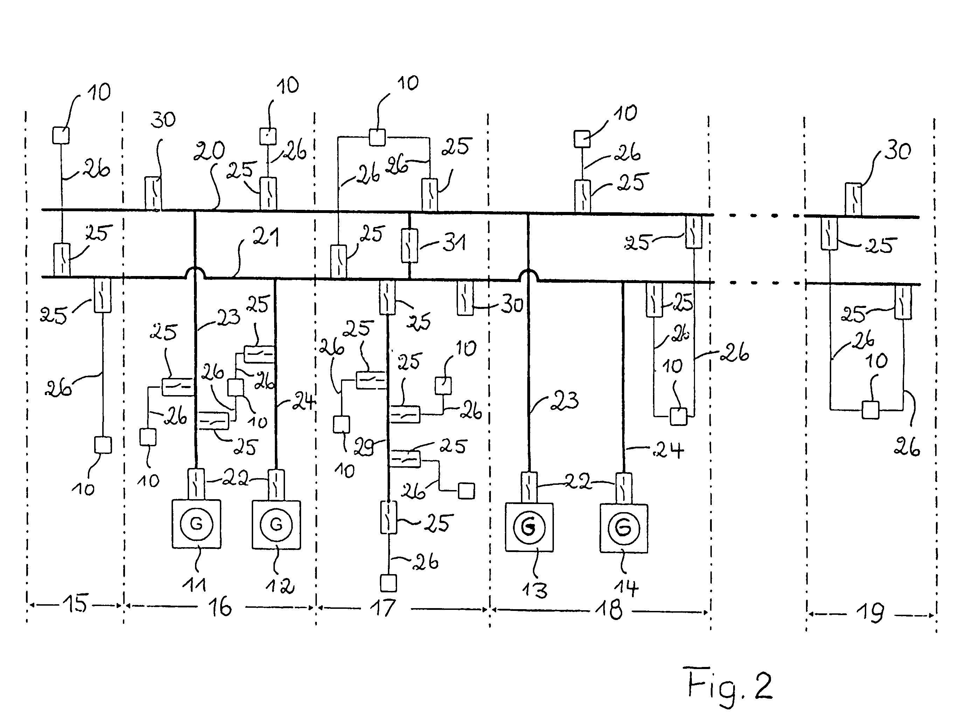

Das in Fig.2 im Blockschaltbild dargestellte Energieverteilungssystem bietet durch einen zweiten Energiebus 21 eine redundante Energieversorgung für die Schiffszonen 15 bis 19. Der zweite Energiebus 21 ist identisch dem vorstehend beschriebenen Energiebus 20 ausgebildet und ebenfalls schiffszonenübergreifend durchgängig installiert. Die vorhandenen Energiequellen 11 bis 14, im Ausführungsbeispiel der Fig.2 wieder durch Generatoren G symbolisiert, sind auf die beiden Energiebusse 20, 21 aufgeteilt, wobei eine Aufteilung in einem gleichen Verhältnis bevorzugt wird. Die Energiequellen 11 bis 14 können dabei über jeweils einen Speiseschalter 22 direkt mit dem Energiebus 20 und dem Energiebus 21 gekoppelt sein, aber auch - wie diese in Fig.2 dargestellt ist - über die Speiseschalter 22 an Busabzweigen 23, 24 angeschlossen sein, die von dem Energiebus 20 bzw. 21 in den Schiffszonen 16 und 18 abzweigen. Die beiden Energiebusse 20, 21 verlaufen parallel, zum Beispiel einer steuerbordseitig und der andere backbordseitig, durch die entsprechenden Schiffszonen 15 bis 19. Die beiden Energiebusse 20, 21 sind an einer beliebigen Stelle miteinander durch einen Kupplungsschalter 31 verbunden, so daß bei Ausfall der Energieversorgung für einen Energiebus 20 bzw. 21 die Stromversorgung über den anderen Energiebus 21 bzw. 20 bewirkt werden kann.

Wie aus Fig.2 ersichtlich und dort in den Schiffszone 16, 17, 18 und 19 dargestellt ist, erfolgt eine redundante Stromversorgung von besonders wichtigen Stromverbrauchern 10 in diesen Schiffszonen 16 bis 19 wiederum über jeweils zwei Lastkabel 26 mit jeweils zwei Abgangsschaltern 25, wobei von den beiden parallelen Abgangsschaltern 25 jeweils einer an dem Energiebus 20 und der andere an dem Energiebus 21 angeschlossen ist. Wie für die Schiffszone 16 in Fig.2 dargestellt ist, kann ein redundanter Anschluß eines Verbrauchers 10 über Lastkabel 26 und Abgangsschalter 25 auch von den Busabzweigen 23 und 24 erfolgen.

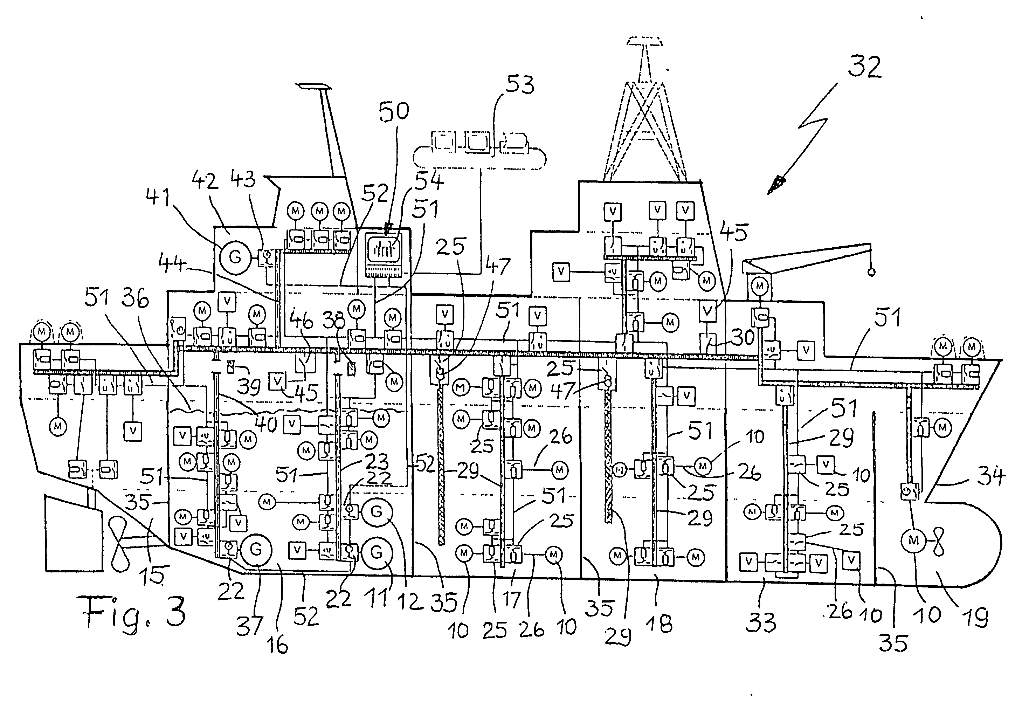

In Fig. 3 ist schematisch das beschriebene Energieverteilungssystem gemäß Fig. 1 in seiner Integration in ein Schiff 32 dargestellt. Das Schiff 32 ist in die einzelnen Schiffsabteilungen oder Schiffszonen 16 bis 19 und 33 unterteilt, die im Unterwasserteil des Schiffsrumpfs 34 durch Schotten oder Schotts 35 voneinander separiert sind, so daß bei einem Unterwasserleck in einer Schiffszone 16 kein Wasser in die übrigen Schiffszonen 15, 33 und 17 bis 19 eindringen kann, wie dies in Fig. 3 durch einen Wasserspiegel 36 in der Schiffszone 16 illustriert ist. Der schiffszonenubergreifende Energiebus 20 gemäß Fig. 1 (und bei redundanter Energieversorgung gemäß Fig. 2 auch der Energiebus 21) ist oberhalb der Schotts 35 verlegt, so daß im Notbetrieb, d.h. bei überfluteter Schiffszone 16, in welcher die Energiequellen 11, 12 und 37 installiert sind, die Energieverteilung des Schiffes in sicheren Schiffsbereichen verläuft. Die durch das eindringende Wasser gefährdeten Teile des Energiebusses 20 können durch Trennlaschen 38, 39 oder Trennschalter abgetrennt werden, wie dies in Fig. 3 für den Busabzweig 23 und den Busabzweig 40 dargestellt ist.

Für die Notenergieversorgung des Schiffes 32 ist eine Notenergiequelle 41 in einer oberhalb des Schiffdecks liegenden Schiffsabteilung 42 installiert. Diese Notenergiequelle 41 in Form eines Notstromgenerators G ist über einen Notspeiseschalter 43 auf den Energiebus 20 bzw. auf einen Busabzweig 44 davon aufschaltbar. Damit erfolgt die Notversorgung der übrigen Schiffszonen 15, 33 und 17 bis 19 über den Energiebus 20. Im Notbetrieb, bei Speisung des Energiebusses 20 nur durch die Notenergiequelle 41, werden sämtliche Haupt- und Nebenverbraucher 10 über den Black-Out des Energieverteilungsnetzes durch in den Abgangsschaltern 25 integrierte Unterspannungsauslöser automatisch vom Netz getrennt und lediglich die Notverbraucher 45 werden über die Notabgangsschalter 30 und 46 an den Energiebus 20 angeschlossen Durch die automatische Abschaltung der Energieverbraucher 20 im Notbetrieb wird eine Überlastung des leistungsschwächeren Notstromgenerators G der Notenergiequelle 41 verhindert. Die Notabgangsschalter 46 können in einer leicht zu bewerkstelligenden Nachrüstung unter Spannung direkt im Verlauf des Energiebusses 20 in jeder betroffenen Schiffsabteilung oder Schiffszone installiert werden, wie dies in Fig. 3 für die überflutete Schiffszone 16 dargestellt ist.

Wie in Fig. 3 für die Schiffszone 17 und 18 dargestellt ist, ist eine Umwandlung des Primärspannungssystems des Energiebusses 20 in ein Sekundarspannungssystem für bestimmte Energieverbraucher dezentral in den Schiffszonen vorgenommen, wozu zwischen einem Unterenergiebus 29 oder einem Lastkabel Spannungswandler 47 über Abgangsschalter 25 an den Energiebus 20 angeschlossen sind. Die Spannungswandler 47 sind im Ausführungsbeispiel der Fig. 3 als Transformatoren ausgeführt, doch können auch Umformer verwendet werden. Die Vorteile einer solchen dezentralen Umwandlung der Primärspannung in die Sekundärspannung liegt in der Kosteneinsparung gegenüber der Installation von zwei getrennten, schiffsabteilungsübergreifenden Energieverteilungssystemen für jeweils die Primär- und Sekundärspannung. Die Spannungswandler 47 (Transformatoren oder Umformer) können zudem kleiner konzipiert werden und werden dadurch billiger.

Die Steuerung und Überwachung der Energieverteilung im Schiff 32 erfolgt zweistufig mit einer an zentraler Stelle installierten zentralen Fernsteuerung und -überwachung 50 und mit Vorortsteuerungen und -überwachungen in den Schiffszonen 16 bis 19 und 33. Im Ausführungsbeispiel der Fig. 3 ist die zentrale Stelle die Schiffsabteilung 42, die die Notstrom-Erzeuger aufnimmt und eine Maschinenkontrollstation darstellt. Die Fernsteuerung und- überwachung 50 wird visuell unterstützt durch Mimikschaltbilder des Energiebusses 20. Die Steuerbefehle werden über zugehörige Softkeys direkt am Bildschirm 54 eingegeben. Die Übertragung der Steuerungs- und überwachungssignale an die Schalteinrichtungen, wie Abgangsschalter 25, Trennschalter 38, 39, Notspeiseschalter 30 erfolgt über einen industrieüblichen, schnellen Datenbus 51, z.B. ASI. In einem zentralen Rechner werden ebenfalls die übergeordneten Schutzfunktionen und die automatischen Steuer- und Regelfunktionen für die Energiequellen 11, 12 und 37 durchgeführt. Der erforderliche Datenaustausch mit den Elektronikbausteinen für die Stromaggregate der Energiequellen 11, 12, 37 erfolgt über einen separaten Datenbus 52. Der zentrale Rechner ist mit einer Internetbus-Schnittstelle ausgerüstet, über die alle im Rechner vorhandenen Daten und Signale an ein übergeordnetes Leitsystem 53 übertragen werden können.

Die dezentralen Vorortsteuerungen und -überwachungen erfolgen manuell direkt am Einbauort der Schalteinrichtungen durch manuelle Betätigungsmöglichkeiten an den Schalteinrichtungen und durch visuelle Überwachung mit entsprechend vorgesehenen Mitteln, wie Schalterstellungsanzeigen, Leuchtmelder, Meßinstrumente oder dgl. direkt am Einbauort der Schalteinrichtungen.

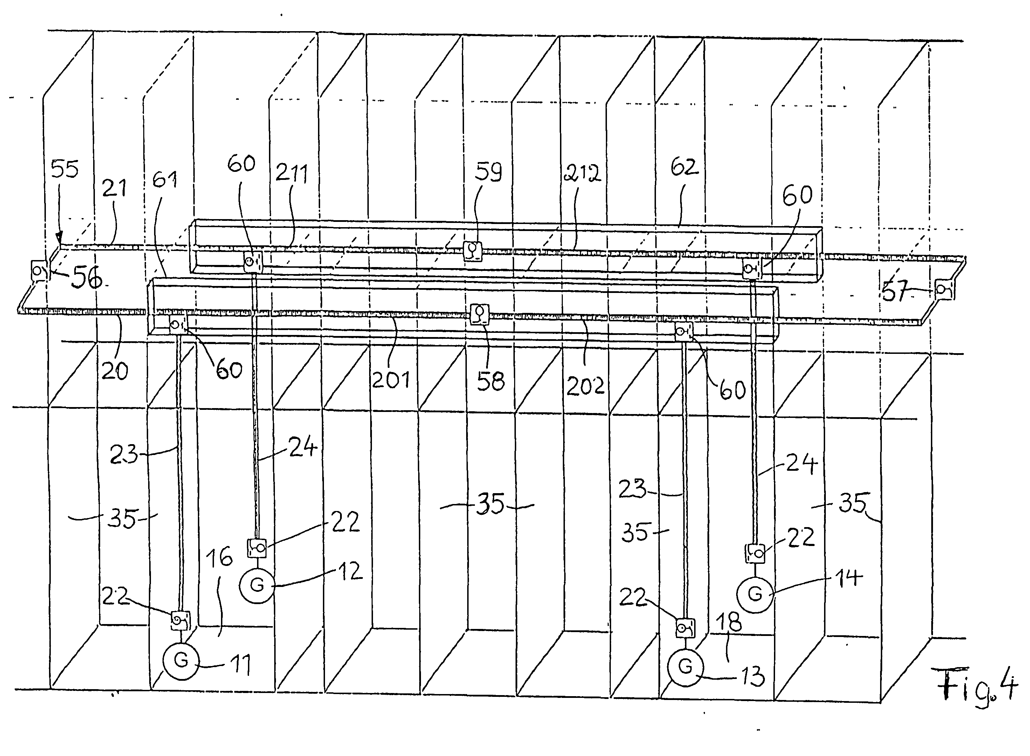

In Fig. 4 ist ausschnittsweise ein Energieverteilungssystem für redundante Energieversorgung dargestellt, bei dem, wie bei dem Energieverteilungssystem gemäß Fig. 2, die Energieversorgung auf zwei Schiffszonen 16 und 18 aufgeteilt ist und in jeder Schiffszone 16 und 18 zwei Energiequellen 11, 12 bzw. 13, 14 installiert sind, die über Speiseschalter 22 an jeweils einem Busabzweig 23 bzw. 24 angekoppelt sind. Gegenüber der Fig. 2 ist dieses Energieverteilungssystem insofern modifiziert, als die beiden schiffszonenübergreifenden Energiebusse 20, 21 gemäß Fig. 2 mittels zweier Kuppelschalter 56, 57 zu einem Ringbus 55 vereinigt sind, der durch weitere Kuppelschalter 58 und 59 in stromführende Busabschnitte 201, 202, 211 und 212 unterteilt werden kann. Jeder Busabschnitt 201, 202, 211 und 212 wird von einer der Energiequellen 11 bis 14 gespeist, indem die Busabzweige 23, 24 über Trennschalter 60 mit je einem der Busabschnitte 201 und 202 bzw. 211 und 212 verbunden sind.

Wie in Fig. 4 schematisch dargestellt ist, verläuft der Ringbus 55 in weiten Teilen innerhalb zweier Kastenträger 61, 62 des Schiffes 32, wie sie bei Schiffen mit militärischem Einsatzprofil an den beiden Schiffslängsseiten oberhalb der wasserdichten Schotts 35 zu finden sind. Diese Kastenträger 61. 62 sind begehbar und gepanzert und aufgrund ihrer Bauart als besonders sicher hinsichtlich äußerer mechanischer Einwirkungen im Kampfeinsatz des Schiffes eingestuft. Die Kupplungsschalter 56 bis 59 und die Trennschalter 60 sind ebenfalls in den beiden Kastenträgern 61, 62 untergebracht. Die hier nicht weiter dargestellte Energieversorgung in den einzelnen Schiffszonen erfolgt redundant über die Abgangsschalter 25, wie sie in Fig. 3 dargestellt sind, die direkt an den Ringbus 55 angeschlossen und damit auch innerhalb der Kastenträger 61, 62 plaziert sind. Diese Ringbuskonfiguration gewährleistet die Energieversorgung mit hoher Sicherheit, Verfügbarkeit und Standfestigkeit. Auch bei diesem Ringbus 55 erfolgt die Energieversorgung der Schiffszonen mit Sekundarspannung über dezentrale, in den jeweiligen Schiffszonen angeordnete Spannungswandler 47 wie in Fig. 3.

## Patentansprüche

1. Energieverteilungssystem in Schiffen, um auf Schiffszonen (15 bis 19) verteilte Energieverbraucher (10) aus bordeigenen Energiequellen (11, 12; 11 bis 14) innerhalb einer jeden Schiffszone (11 bis 19) über Leistungsschalter und Lastkabel (26) mit Energie zu versorgen, **dadurch gekennzeichnet, daß** mindestens ein von den Energiequellen (11, 12) gespeister Energiebus (20) mehrere, vorzugsweise alle, Schiffszonen (15 bis 19) durchzieht und daß innerhalb einer Schiffszone (15 bis 19) an dem Energiebus (20) Abgangsschalter (25) angeschlossen sind, um Verbindungen direkt zu Energieverbrauchern (10) und/oder zu mindestens einer Unterverteiler-Schalttafel (27) und/oder mindestens einem Unterenergiebus (29) herzustellen.

2. Energieverteilungsystem nach Anspruch 1, **dadurch gekennzeichnet, daß** die mindestens eine Unterverteiler-Schalttafel (27) über ein Lastkabel (26) an einem Abgangsschalter (25) angeschlossen ist und daß die Unterverteiler-Schalttafel (27) eine Mehrzahl von Verteilerschaltern (28) aufweist, an deren Ausgängen jeweils ein zu einem Energieverbraucher (10) führendes Lastkabel (26) angeschlossen ist.

3. Energieverteilungssystem nach Anspruch 1 oder 2, **dadurch gekennzeichnet, daß** an den Unterenergiebussen (29) weitere Abgangsschalter (25) angeschlossen sind, die ausgangsseitig über je ein Lastkabel (26) mit einem Energieverbraucher (10) verbunden sind.

4. Energieverteilungssystem nach einem der Ansprüche 1 bis 3, **dadurch gekennzeichnet, daß** mindestens ein dem Energiebus (20) zugeordneter Abgangsschalter (30) für eine Notvorsorgung vorgehalten ist.

5. Energieverteilungssystem nach einem der Ansprüche 1 bis 4, **dadurch gekennzeichnet, daß** ausgewählte Energieverbraucher (10) und/oder Unterverteiler-Schalttafeln (27) und/oder Unterenergiebusse (29) innerhalb der Schiffzone (15 bis 19) über jeweils zwei Abgangsschalter (25) an den Energiebus (20; 21) anschließbar sind.

6. Energieverteilungssystem nach einem der Ansprüche 1 bis 4, **dadurch gekennzeichnet, daß** zwei gleichartige Energiebusse (21) vorgesehen sind und die Energiequellen (11 bis 14) auf beide Energiebusse (20, 21) aufgeteilt sind.

7. Energieverteilungssystem nach Anspruch 6, **dadurch gekennzeichnet, daß** die beiden Energiebusse (20, 21) durch mindestens einen Kupplungsschalter (31) miteinander verbunden sind.

8. Energieverteilungssystem nach Anspruch 6 oder 7, **dadurch gekennzeichnet, daß** ausgewählte Energieverbraucher (10) und/oder Unterverteiler-Schalttafeln (27) und/oder Unterenergiebusse (29) innerhalb einer Schiffszone (16, 17, 19) über je einen Abgangsschalter (25) mit dem einen Energiebus (20) und mit dem anderen Energiebus (21) verbunden sind.

9. Energieverteilungssystem nach einem der Ansprüche 1 bis 8, **dadurch gekennzeichnet, daß** jede Energiequelle (11, 12; 11 bis 14) mittels eines Speiseschalters (22) auf den Energiebus (20; 20, 21) aufschaltbar ist.

10. Energieversorgungssystem nach Anspruch 9, **dadurch gekennzeichnet, daß** in den die Energiequellen (11, 12; 11 bis 14) enthaltenden Schiffszonen (16; 16, 18) der Energiebus (20; 20, 21) mindestens einen Busabzweig (23; 23, 24) aufweist, an dem die Speiseschalter (22) angeschlossen sind.

11. Energieverteilungssysteme nach einem der Ansprüche 1 bis 10, **dadurch gekennzeichnet, daß** der Energiebus (20; 20, 21) und die Busabzweige (23; 23, 24) als metallgekapselte Stromschienen ausgeführt sind und an den Stromschienen Anschlußelemente für die Abgangsschalter (25) vorgesehen sind.

12. Energieverteilungssytem nach einem der Ansprüche 1 bis 11, **dadurch gekennzeichnet, daß** mindestens eine ausschließlich zur Notversorgung dienende Energiequelle (41) mittels eines Notspeiseschalters (43) auf den Energiebus (20) aufschaltbar ist.

13. Energieverteilungssystem nach Anspruch 12, **dadurch gekennzeichnet, daß** spätestens mit Ausschalten der Notversorgungs-Energiequelle (41) alle nicht der Notversorgung dienenden Verbraucher (10) vom Energiebus (20) getrennt sind.

14. Energieverteilungssysteme nach Anspruch 13, **dadurch gekennzeichnet, daß** die Trennung durch eine in den Abgangsschaltern (25) integrierte Unterspannungsauslösung bewirkbar ist.

15. Energieverteilungssysteme nach einem der Ansprüche 1 bis 14, **dadurch gekennzeichnet, daß** an den Energiebus (20) anzuschließende Abgangsschalter (30, 46) für die Notversorgung unter Spannung nachrüstbar sind.

16. Energieverteilungssystem nach einem der Ansprüche 1 bis 15, **dadurch gekennzeichnet, daß** Spannungswandler (47) zum Betreiben von Sekundärspannungsnetzen in den Schiffszonen (17, 18) an den Energiebus (20) angeschlossen sind.

17. Energieverteilungssystem nach einem der Ansprüche 1 bis 16, **dadurch gekennzeichnet, daß** der mindestens eine schiffszonenübergreifende Energiebus (20) oberhalb von die Schiffszonen (15 bis 19, 33) trennenden Schotts (35) verlegt ist.

18. Energieverteilungssystem nach einem der Ansprüche 4 bis 17, **dadurch gekennzeichnet, daß** die beiden Energiebusse (20, 21) mittels zweier Kuppelschalter (56, 57) zu einem Ringbus (55) vereinigt sind.

19. Energieverteilungssystem nach Anspruch 18, **dadurch gekennzeichnet, daß** weitere Kuppelschalter (58, 59) den Ringbus (55) in Busabschnitte (201, 202, 211, 212) unterteilen, an denen jeweils mindestens eine Energiequelle (11 bis 14) angeschlossen ist.

20. Energieverteilersystem nach Anspruch 18 oder 19, **dadurch gekennzeichnet, daß** der Ringbus (55) in begehbaren, gepanzerten Kästen (61, 62) verlegt ist, die an den beiden Schiffslängsseiten oberhalb der Schotts (35) verlaufen.

21. Energieverteilungssystem nach Anspruch 20, **dadurch gekennzeichnet, daß** die Abgangsschalter (25) für die Stromversorgung der Schiffszonen (12 bis 19, 33) und die Trennschalter (60) für die zu den Energiequellen (11 bis 14) führenden Busabzweige (23, 24) in den Kästen (61, 62) plaziert sind.

22. Energieverteilungssystem nach einem der Ansprüche 1 bis 21, **gekennzeichnet durch** eine zweistufige Steuerung und Überwachung des Energiebusses (20), die eine zentrale Fernsteuerung und -überwachung (50) und dezentrale Vorortsteuerungen und -überwachungen in den Schiffszonen (11 bis 19, 33) umfaßt.

23. Energieverteilungssystem nach Anspruch 22, **dadurch gekennzeichnet, daß** die zentrale Fernsteuerung und - überwachung (50) an zentraler Stelle (42), z.B. in einer Energieerzeugungsstation oder Maschinenkontrollstation, installiert ist und daß zur Übertragung der Steuerungs- und Überwachungsignale ein schneller Datenbus (52) vorhanden ist.

24. Energieverteilungssystem nach Anspruch 1, **gekennzeichnet durch** mindestens eine Unterverteiler-Schalttafel (27) und/oder mindestens einen Unterenergiebus (29), die mittels der Abgangsschalter (25) an den Energiebus (20) angeschlossen sind.

## Claims

1. Power distribution system in marine vessels, in order to supply power to power loads (10) which are distributed in marine vessels (15 to 19) from the vessel's own power sources (11, 12; 11 to 14) within each marine vessel zone (11 to 19) via circuit breakers and power cables (26), **characterized in that** at least one power bus (20), which is fed from the power sources (11, 12), passes through two or more, and preferably all, of the marine vessel zones (15 to 19), and **in that** outgoer switches (25) are connected to the power bus (20) within a marine vessel zone (15 to 19) in order to produce connections directly to power loads (10) and/or to at least one sub-distribution switch panel (27) and/or at least one sub-power bus (29).

2. Power distribution system according to Claim 1, **characterized in that** the at least one sub-distribution switch panel (27) is connected via a power cable (26) to an outgoer switch (25), and **in that** the sub-distribution switch panel (27) has two or more distribution switches (28), to each of whose outputs a power cable (26) is connected which leads to a power load (10).

3. Power distribution system according to Claim 1 or 2, **characterized in that** further outgoer switches (25) are connected to the sub-power buses (29) and are each connected on the output side via a power cable (26) to a power load (10).

4. Power distribution system according to one of Claims 1 to 3, **characterized in that** at least one outgoer switch (30), which is associated with the power bus (20), is kept available for an emergency supply.

5. Power distribution system according to one of Claims 1 to 4, **characterized in that** selected power loads (10) and/or sub-distribution switch panels (27) and/or sub-power buses (29) within the marine vessel zone (15 to 19) can be connected via in each case two outgoer switches (25) to the power bus (20; 21).

6. Power distribution system according to one of Claims 1 to 4, **characterized in that** two identical power buses (21) are provided, and the power sources (11 to 14) are split between the two power buses (20, 21).

7. Power distribution system according to Claim 6, **characterized in that** the two power buses (20, 21) are connected to one another by means of at least one coupling switch (31).

8. Power distribution system according to Claim 6 or 7, **characterized in that** selected power loads (10) and/or sub-distribution switch panels (27) and/or sub-power buses (29) within a marine vessel zone (16, 17, 19) are connected via in each case one outgoer switch (25) to the first power bus (20) and to the other power bus (21).

9. Power distribution system according to one of Claims 1 to 8, **characterized in that** each power source (11, 12; 11 to 14) can be connected to the power bus (20; 20, 21) by means of a feed switch (22).

10. Power supply system according to Claim 9,
**characterized in that** the power bus (20; 20, 21) has at least one bus tap (23; 23, 24), to which the feed switches (22) are connected, in the marine vessel zones (16; 16, 18) which contain the power sources (11, 12; 11 to 14).

11. Power distribution systems according to one of Claims 1 to 10, **characterized in that** the power bus (20; 20, 21) and the bus taps (23; 23, 24) are in the form of metal-encapsulated busbars, and connecting elements for the outgoer switches (25) are provided on the busbars.

12. Power distribution system according to one of Claims 1 to 11, **characterized in that** at least one power source (41), which is used exclusively for the emergency supply, can be connected to the power bus (20) by means of an emergency feed switch (43).

13. Power distribution system according to Claim 12, **characterized in that** all of the loads (10) which are not used for emergency supply are disconnected from the power bus (20) at the latest when the emergency supply power source (41) is switched off.

14. Power distribution systems according to Claim 13, **characterized in that** the disconnection is carried out by means of an undervoltage release, which is integrated in the outgoer switches (25).

15. Power distribution systems according to one of Claims 1 to 14, **characterized in that** outgoer switches (30, 46) which can be connected to the power bus (20) can be retrofitted for emergency supply undervoltage.

16. Power distribution system according to one of Claims 1 to 15, **characterized in that** voltage converters (47) are connected to the power bus (20) for operation of secondary voltage networks in the marine vessel zones (17, 18).

17. Power distribution system according to one of Claims 1 to 16, **characterized in that** the at least one power bus (20) which extends over different marine vessel zones is routed above bulkheads (35) which separate the marine vessel zones (15 to 19, 33).

18. Power distribution system according to one of Claims 4 to 17, **characterized in that** the two power buses (20, 21) are combined by means of two coupling switches (56, 57) to form a ring bus (55).

19. Power distribution system according to Claim 18, **characterized in that** further coupling switches (58, 59) subdivide the ring bus (55) into bus sections (201, 202, 211, 212), to each of which at least one power source (11 to 14) is connected.

20. Power distribution system according to Claim 18 or 19, **characterized in that** the ring bus (55) is routed in armoured boxes (61, 62) which personnel can enter and run on the two longitudinal sides of the marine vessel above the bulkheads (35).

21. Power distribution system according to Claim 20, **characterized in that** the outgoer switches (25) for supplying electrical power to the marine vessel zones (12 to 19, 33) and the isolating switches (60) for the bus taps (23, 24) which lead to the power sources (11 to 14) are located in the boxes (61, 62).

22. Power distribution system according to one of Claims 1 to 21, **characterized by** two-stage control and monitoring of the power bus (20), which comprises central remote control and monitoring (50) and decentralized local control and monitoring facilities in the marine vessel zones (11 to 19, 33).

23. Power distribution system according to Claim 22, **characterized in that** the central remote control and monitoring (50) is installed at a central point (42), for example at a power generating station or machine monitoring station, and **in that** a high-speed data bus (52) is provided for transmission of the control and monitoring signals.

24. Power distribution system according to Claim 1, **characterized by** at least one sub-distribution switch panel (27) and/or at least one sub-power bus (29), which are/is connected to the power bus (20) by means of the outgoer switches (25).

## Revendications

1. Système de distribution d'énergie dans les bateaux pour alimenter en énergie des consommateurs d'énergie (10) répartis sur des zones du bateau (15 à 19) à partir de sources d'énergie (11, 12 ; 11 à 14) propres du bord à l'intérieur de chacune des zones du bateau (11 à 19) par le biais de commutateurs de puissance et de câbles de charge (26), **caractérisé en ce qu'**au moins un bus d'énergie (20) alimenté par les sources d'énergie (11, 12) traverse plusieurs, de préférence toutes les zones du bateau (15 à 19) et qu'à l'intérieur d'une zone du bateau (15 à 19) des commutateurs de départ (25) sont raccordés au bus d'énergie (20) pour établir des liaisons directement avec des consommateurs d'énergie (10) et/ou avec au moins un tableau de distribution secondaire (27) et/ou au moins un bus d'énergie secondaire (29).

2. Système de distribution d'énergie selon la revendication 1, **caractérisé en ce que** l'au moins un tableau de distribution secondaire (27) est raccordé à un commutateur de départ (25) par le biais d'un câble de charge (26) et que le tableau de distribution secondaire (27) présente une pluralité de commutateurs de distribution (28) aux sorties desquels est à chaque fois raccordé un câble de charge (26) menant à un consommateur d'énergie (10).

3. Système de distribution d'énergie selon la revendication 1 ou 2, **caractérisé en ce qu'**aux bus d'énergie secondaires (29) sont raccordés d'autres commutateurs de sortie (25) dont la sortie est à chaque fois reliée à un consommateur d'énergie (10) par le biais d'un câble de charge (26).

4. Système de distribution d'énergie selon l'une des revendications 1 à 3, **caractérisé en ce qu'**au moins un commutateur de départ (30) affecté au bus d'énergie (20) est gardé en réserve pour une alimentation de secours.

5. Système de distribution d'énergie selon l'une des revendications 1 à 4, **caractérisé en ce que** des consommateurs d'énergie (10) et/ou des tableaux de distribution secondaires (27) et/ou des bus d'énergie secondaires (29) choisis à l'intérieur des zones du bateau (15 à 19) peuvent être raccordés au bus d'énergie (20 ; 21) à chaque fois par le biais de deux commutateurs de départ (25).

6. Système de distribution d'énergie selon l'une des revendications 1 à 4, **caractérisé en ce que** deux bus d'énergie (21) du même type sont prévus et les sources d'énergie (11 à 14) sont réparties sur les deux bus d'énergie (20, 21).

7. Système de distribution d'énergie selon la revendication 6, **caractérisé en ce que** les deux bus d'énergie (20, 21) sont reliés ensemble par au moins un commutateur d'accouplement (31).

8. Système de distribution d'énergie selon la revendication 6 ou 7, **caractérisé en ce que** les consommateurs d'énergie (10) et/ou les tableaux de distribution secondaires (27) et/ou les bus d'énergie secondaires (29) choisis à l'intérieur d'une zone du bateau (16, 17, 19) sont reliés avec un bus d'énergie (20) et avec l'autre bus d'énergie (21) à chaque fois par le biais d'un commutateur de départ (25).

9. Système de distribution d'énergie selon l'une des revendications 1 à 8, **caractérisé en ce que** chaque source d'énergie (11, 12 ; 11 à 14) peut être connecté au bus d'énergie (20 ; 20, 21) au moyen d'un commutateur d'alimentation (22).

10. Système de distribution d'énergie selon la revendication 9, **caractérisé en ce que** dans les zones du bateau (16 ; 16, 18) qui contiennent les sources d'énergie (11, 12 ; 11 à 14), le bus d'énergie (20 ; 20, 21) présente au moins une bifurcation de bus (23 ; 23, 24) à laquelle sont raccordés les commutateurs d'alimentation (22).

11. Système de distribution d'énergie selon l'une des revendications 1 à 10, **caractérisé en ce que** le bus d'énergie (20 ; 20, 21) et les bifurcations de bus (23 ; 23, 24) sont réalisés sous la forme de barres conductrices à enveloppe métallique et des éléments de raccordement pour les commutateurs de départ (25) sont prévus sur les barres conductrices.

12. Système de distribution d'énergie selon l'une des revendications 1 à 11, **caractérisé en ce qu'**au moins une source d'énergie (41) servant uniquement à l'alimentation de secours peut être connectée au bus d'énergie (20) au moyen d'un commutateur d'alimentation de secours (43).

13. Système de distribution d'énergie selon la revendication 12, **caractérisé en ce que** tous les consommateurs (10) qui ne servent pas à l'alimentation de secours sont déconnectés du bus d'énergie (20) au plus tard au moment de la désactivation de la source d'énergie de secours (41).

14. Système de distribution d'énergie selon la revendication 13, **caractérisé en ce que** la déconnexion peut être réalisée par un déclencheur à surtension intégré dans les commutateurs de départ (25).

15. Système de distribution d'énergie selon l'une des revendications 1 à 14, **caractérisé en ce que** les commutateurs de départ (30, 46) à raccorder au bus d'énergie (20) pour l'alimentation de secours peuvent être rajoutés sous tension.

16. Système de distribution d'énergie selon l'une des revendications 1 à 15, **caractérisé en ce que** des convertisseurs de tension (47) destinés au fonctionnement des réseaux de tension secondaire dans les zones du bateau (17, 18) sont raccordés au bus d'énergie (20).

17. Système de distribution d'énergie selon l'une des revendications 1 à 16, **caractérisé en ce que** l'au moins un bus d'énergie (20) s'étendant sur les zones d'un bateau est posé au-dessus des cloisons étanches (35) qui isolent les zones du bateau (15 à 19, 33).

18. Système de distribution d'énergie selon l'une des revendications 4 à 17, **caractérisé en ce que** les deux bus d'énergie (20, 21) sont réunis au moyen de deux commutateurs d'accouplement (56, 57) pour former un bus annulaire (55).

19. Système de distribution d'énergie selon la revendication 18, **caractérisé en ce que** d'autres commutateurs d'accouplement (58, 59) divisent le bus annulaire (55) en sections de bus (201, 202, 211, 212) auxquelles est à chaque fois raccordée au moins une source d'énergie (11 à 14).

20. Système de distribution d'énergie selon la revendication 18 ou 19, **caractérisé en ce que** le bus annulaire (55) est posé dans des caissons accessibles renforcés (61, 62) qui s'étendent sur les deux côtés longitudinaux du bateau au-dessus des cloisons étanches (35).

21. Système de distribution d'énergie selon la revendication 20, **caractérisé en ce que** les commutateurs de départ (25) pour l'alimentation électrique des zones du bateau (12 à 19, 33) et les commutateurs d'isolement (60) pour les bifurcation du bus (23, 24) qui mènent aux sources d'énergie (11 à 14) sont placés dans les caissons (61, 62).

22. Système de distribution d'énergie selon l'une des revendications 1 à 21, **caractérisé par** un dispositif de commande et de surveillance à deux niveaux du bus d'énergie (20) qui comprend un dispositif de commande et de surveillance à distance centralisé (50) ainsi que des dispositifs de commande et de surveillance locaux décentralisés dans les zones du bateau (11 à 19, 33).

23. Système de distribution d'énergie selon la revendication 22, **caractérisé en ce que** le dispositif de commande et de surveillance à distance centralisé (50) est installé en un endroit central (42), par exemple dans une station de production d'énergie ou dans une station de commande des machines et qu'un bus de données rapide (52) est présent pour la transmission des signaux de commande et de surveillance.

24. Système de distribution d'énergie selon la revendication 1, **caractérisé par** au moins un tableau de distribution secondaire (27) et/ou au moins un bus d'énergie secondaire (29) qui sont raccordés au bus d'énergie (20) au moyen du commutateur de départ (25).
